**Europäisches Patentamt**

**European Patent Office**

**Office européen des brevets**

(19)

(11) Veröffentlichungsnummer: **0 195 306**
**A2**

(12) # EUROPÄISCHE PATENTANMELDUNG

(21) Anmeldenummer: **86102837.1**

(22) Anmeldetag: **04.03.86**

(51) Int. Cl.⁴: **B 65 G 57/24**
**B 65 G 47/19**

(30) Priorität: **16.03.85 DE 3509573**

(43) Veröffentlichungstag der Anmeldung:
**24.09.86 Patentblatt 86/39**

(84) Benannte Vertragsstaaten:
**AT FR GB IT**

(71) Anmelder: **Fried. Krupp Gesellschaft mit beschränkter Haftung**
**Altendorfer Strasse 103**
**D-4300 Essen 1(DE)**

(72) Erfinder: **Güntzel, Klaus**
**Albert-Schatz-Strasse 29**
**D-4040 Neuss 22(DE)**

(54) Übergabevorrichtung.

(57) Die Übergabevorrichtung oder −station dient zum Aufnehmen und Weiterleiten von Haufwerk auf ein nachgeschaltetes kontinuierlich arbeitendes Fördermittel, das von einem Abzugsförderer der Vorrichtung beschickt wird, wobei die Vorrichtung von Lastkraftwagen befahrbar ist. Das Neue wird darin gesehen, daß am Boden der Vorrichtung mindestens ein ein- oder mehrteiliger Kettenförderer vorgesehen ist, mit dem das Fördergut ohne große Staubentwicklung seitlich auf das Abförderband transportiert wird. Zur Schonung der Kettenförderer können über denselben durchlässige Fahrbahnen angeordnet sein.

Fig. 3

FRIED. KRUPP GESELLSCHAFT MIT BESCHRÄNKTER HAFTUNG
in Essen


Übergabevorrichtung


Die Erfindung betrifft eine Übergabevorrichtung oder -station zum Aufnehmen und Weiterleiten von Haufwerk u.dgl. auf ein nachgeschaltetes kontinuierlich arbeitendes Fördermittel, das von einem Abzugsförderer der Vorrichtung beschickt wird, wobei die Vorrichtung von Lastkraftwagen befahrbar ist.

Derartige Vorrichtungen werden verwendet, um den diskontinuierlichen Förderstrom in einen kontinuierlichen Abförderstrom zu verwandeln.

Zu diesem Zweck ist aus dem DE-GM 83 30 075 eine Vorrichtung mit einem Aufgabekasten für eine ortsveränderliche Brecheranlage bekannt, wobei der Kasten kippbar ausgebildet ist. Hierbei fahren die das Fördergut tansportierenden Lastkraftwagen in dessen Kasten hinein, laden das Gut ab und verlassen den Kasten wieder. Danach wird der Kasten gekippt und das Gut teilweise aus großer Höhe in den Abzugsförderer hineingeschüttet. Diese Arbeitsweise erbringt einmal aufgrund der großen Förderhöhen große Belastungen des Abförderers und verursacht außerdem - da es sich bei dem Transportgut im allgemeinen um staubbildendes Gut handelt - eine große Staubentwicklung.

Der Erfindung liegt die Aufgabe zugrunde, eine derartige Vorrichtung mit niedriger Bauhöhe derart auszubilden, daß große Sturzhöhen für das Transportgut vermieden werden.

Diese Aufgabe wird dadurch gelöst, daß die Vorrichtung einen Kasten aufweist, dessen Boden durch mindestens einen ein- oder mehrteiligen Kettenförderer gebildet ist, der bzw. die den Abzugsförderer quer zu dessen Abzugsrichtung beschickt bzw. beschicken.

Mit dieser Maßnahme wird ein einfacher Übergang des Gutes auf die Förderelemente erreicht, so daß einmal die großen Sturzhöhen vermieden und zum anderen eine geringere Belastung der Förderelemente erreicht wird.

In weiterer Ausgestaltung der Erfindung wird vorgesehen, daß der Abzugsförderer mittig unter dem mit einem Abzugsschllitz versehenen Kastenboden angeordnet ist.

Dabei können mehrere parallele Abzugsförderer vorgesehen sein, denen jeweils ein Abzugsschlitz zugeordnet ist.

Damit das Fördergut nicht ungehindert auf den Abzugsförderer geleitet wird, wird weiterhin vorgesehen, daß der oder die Abzugsschlitze mit Abstand zum Kastenboden mit Hauben abgedeckt sind, die Durchtrittsschlitze freilassen. Hierdurch wird das Fördergut seitlich von den Kettenförderern auf dem Abzugsförderer transportiert.

Anstelle des mittigen Abzugs aus dem Kasten kann der Abzugsförderer auch seitlich neben dem mit einer Abzugsöffnung versehenen Kastenboden angeordnet sein.

Mehrere Ausführungsbeispiele der Erfindung sind in der Zeichnung dargestellt und werden nachfolgend näher beschrieben. Es zeigen:

Fig. 1 eine Übergabevorrichtung in einem schematischen Längsschnitt,

Fig. 2 die Vorrichtung nach Fig. 1 in einer schematischen Draufsicht,

Fig. 3 die Vorrichtung nach Fig. 1 in einem schematischen Querschnitt und

Fig. 4 und 5 je ein weiteres Ausführungsbeispiel einer solchen Vorrichtung in schematischer Darstellung.

Die Übergabevorrichtung oder -station 1 besteht im wesentlichen aus einem Rahmen 16 mit Stützelementen 15, auf denen ein Kasten 7 zur Aufnahme des Fördergutes vorgesehen ist. Die Station 1 ist mittels der Stützelemente 15 auf dem Planum 2 abgestützt. Mit 3 ist das Fördergut bezeichnet, das mit Hilfe von Lastkraftwagen 6 in den Kasten abgeladen wird.

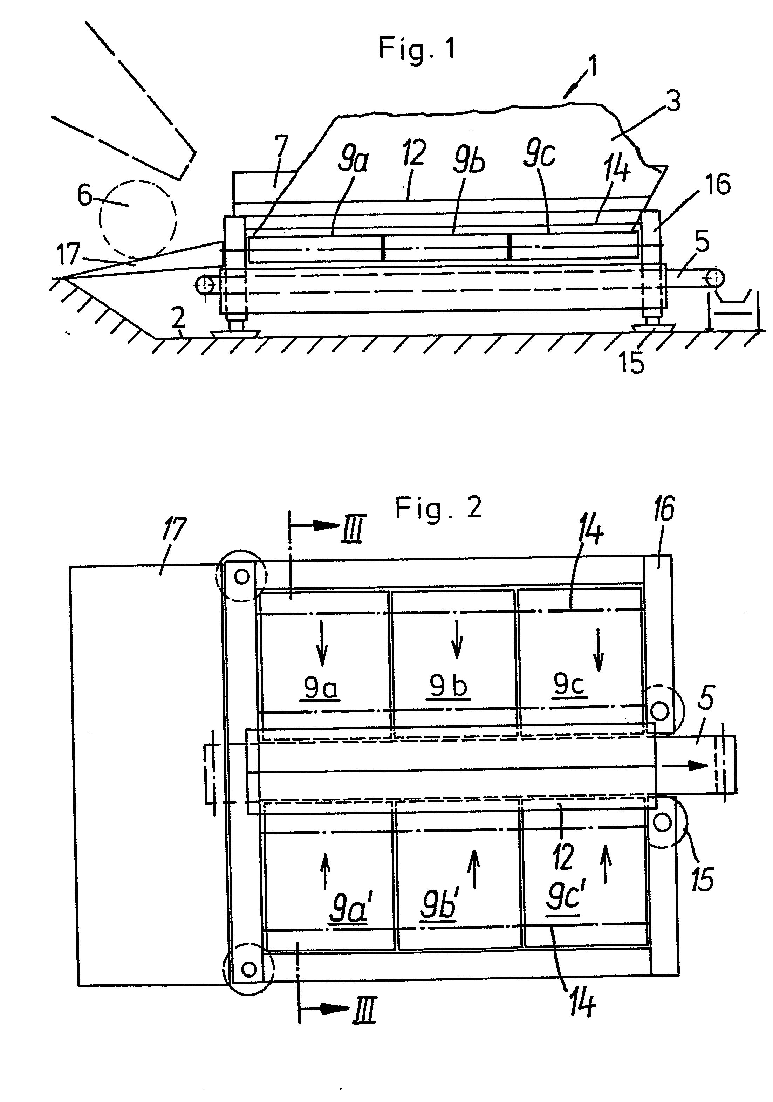

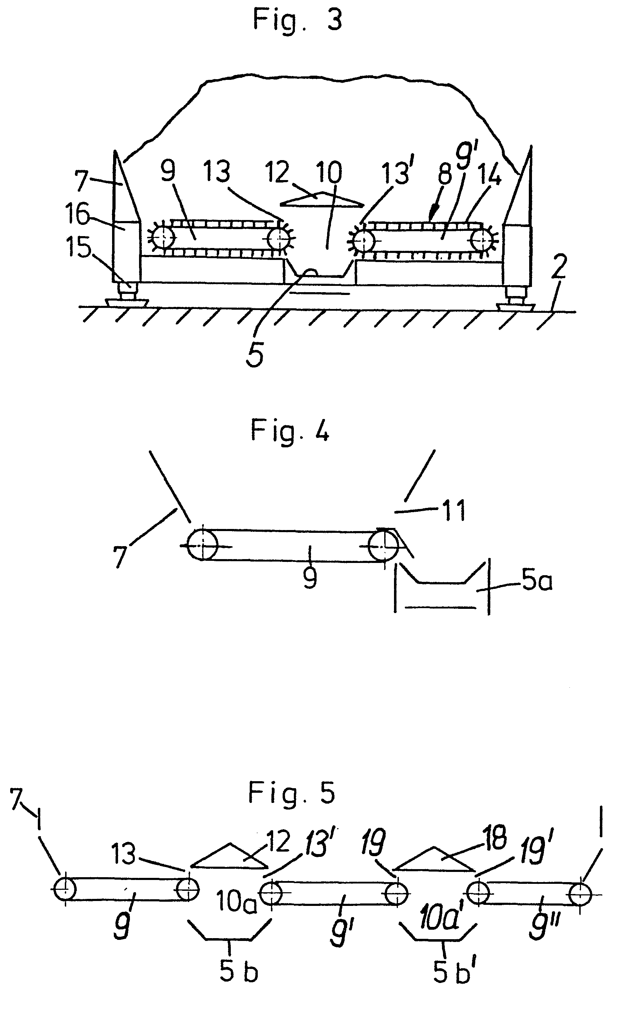

Der Boden des Katens 7 besteht im Ausführungsbeispiel nach Fig. 3 aus zwei 3teiligen Kratzförderern 9, 9', die gemäß Fig. 2 einzeln mit 9a, 9b und 9c bezeichnet sind. Dabei sind die Kratzförderer derart angeordnet, daß sich ein Abzugsschlitz 10 bildet unter dem der Abzugsförderer 5 angeordnet ist. Damit das Fördergut 3 nicht ungehindert auf den Abzugsförderer 5 gelangt, ist eine Haube 12 vorgesehen, die mit Abstand oberhalb der Förderer 9 bzw. 9' angeordnet ist und demzufolge Durchtrittsschlitze 13, 13' bildet.

Die mit Haufwerk beladenen Lastkraftwagen 6 gelangen über eine Rampe 17 in den Kasten 7. Zur Vermeidung von Beschädigungen sind Fahrbahnen 14 mit Abstand oberhalb der Förderer 9 bzw. 9' vorgesehen. Die Fahrbahnen 14 sind als durchlässiger Rost mit (nicht gesondert dargestellten) Längs- und/oder Querträgern ausgebildet.

Bei der Ausbildung der Förderer 9, 9' als einfache Plattenbandförderer kann bei geeigneter Dimensionierung auf den Einbau einer Fahrbahn verzichtet werden. Die Lastkraftwagen fahren dann unmittelbar auf die Plattenbänder.

In Fig. 4 ist ein weiteres Ausführungsbeispiel schematisch dargestellt, bei dem der Förderer 5a seitlich neben dem Kasten 7 angeordnet ist.

Fig. 5 zeigt schematisch einen mittigen Abzug des Fördergutes, bei dem zwei Abzugsschlitze 10a, 10a' vorgesehen sind, unter denen jeweils ein Abzugsförderer 5b, 5b' angeordnet ist. Über den Abzugsschlitzen 10a, 10a' sind Hauben 12, 18 vorgesehen, die mit Abstand oberhalb der Förderer 9, 9', 9" angeordnet sind und demzufolge zwei Paare von Durchtrittsschlitzen 13, 13' bzw. 19, 19' bilden.

Die Vorrichtung ist ortsveränderlich. Sie kann entweder mit einem Fahrwerk versehen sein, auf Kufen stehend gezogen oder mittels einer Transportraupe od. dgl. transportiert werden.

Patentansprüche

1. Übergabevorrichtung zum Aufnehmen und Weiterleiten von Haufwerk u.dgl. auf ein nachgeschaltetes kontinuierlich arbeitendes Fördermittel, das von einem Abzugsförderer der Vorrichtung beschickt wird, wobei die Vorrichtung von Lastkraftwagen befahrbar ist, d a d u r c h   g e k e n n z e i c h n e t , daß die Vorrichtung (1) einen Kasten (7) aufweist, dessen Boden (8) durch mindestens einen ein- oder mehrteiligen Kettenförderer (9) gebildet ist, der bzw. die den Abzugsförderer (5) quer zu dessen Abzugsrichtung beschickt bzw. beschicken.

2. Vorrichtung nach Anspruch 1, dadurch gekennzeichnet, daß der Abzugsförderer (5) mittig unter dem mit einem Abzugsschlitz (10) versehenen Kastenboden (8) angeordnet ist.

3. Vorrichtung nach Anspruch 1, dadurch gekennzeichnet, daß mehrere parallele Abzugsförderer (5b) vorgesehen sind, denen jeweils ein Abzugsschlitz (10a) zugeordnet ist.

4. Vorrichtung nach den Ansprüchen 1 bis 3, dadurch gekennzeichnet, daß der oder die Abzugsschlitze (10, 10a) mit Abstand zum Kastenboden (8) mit Hauben (12) abgedeckt sind, die Durchtrittsschlitze (13) freilassen.

5. Vorrichtung nach Anspruch 1, dadurch gekennzeichnet, daß der Abzugsförderer (5a) seitlich neben dem mit einer Abzugsöffnung (11) versehenen Kastenboden (8) angeordnet ist.

6. Vorrichtung nach den Ansprüchen 1 bis 5, dadurch gekennzeichnet, daß der mehrteilige Kettenförderer (9) aus parallel zueinander synchron arbeitenden Einzelkettenförderern (9a, 9b, ...) besteht.

7. Vorrichtung nach den Ansprüchen 1 bis 6, dadurch gekennzeichnet, daß oberhalb der Kettenförderer (9) Fahrbahnen (14) vorgesehen sind, die mit einer Auffahrrampe verbunden sind.

Fig. 1

Fig. 2

## Fig. 3

7  16  15  9  13  12  10  13'  8  g'  14  2  5

## Fig. 4

7  9  11  5a

## Fig. 5

7  13  12  13'  19  18  19'  10a  10a'  g  g'  g''  5b  5b'